# EUROPEAN PATENT APPLICATION

(11) **EP 4 626 001 A1**
(43) Date of publication of application: **01.10.2025**
(21) Application number: 24166074.5
(22) Date of filing: 25.03.2024
(51) Int. Cl.: H04N 21/431, H04N 21/4402, H04N 21/81, H04N 21/44

(54) **VIDEO IMAGE PROCESSING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented video image processing method is described, which comprises receiving a sequence of video images of a scene, and receiving one or more supplementary media items. Objects of interest within the received video images are identified, and a spatial portion of each received video image is selected to generate a reframed image. The reframing is carried out in dependence on a size and/or position for the received supplementary media items, and a size and/or position of at least one of the identified objects of interest. The spatial portion for each video image is selected to include one or more of the identified objects of interest in that video image. A display image is then rendered, the display image including the reframed image and the supplementary media items. In this way, the images in the video sequence are each reframed in a manner which preserves visibility of the objects of interest while permitting display of the supplementary media items.

## Description

The present disclosure relates to video image processing. Embodiments of the present disclosure relate to an apparatus and a method for processing images for display to prevent occlusion of objects of interest.

### BACKGROUND

Content broadcast where more than one visual element is displayed at the same time needs to balance the visual composition of those elements. Typically, some visual elements will be prioritised over others and the visual composition of the broadcast will reflect that. For example, within a live football match broadcast, a graphical display of match time and current score should not visually obscure the important visual details of the ball, key players, and other game elements.

A basic formula of ideal visual content production is common within specific genres, for example live sporting events. Variations can and do occur, with content producers having a preference for camera position, vision mixing cuts and transitions, placement of multiple visual elements on screen and so on, but still constrained by the genre.

Visual content from multiple cameras or other sources, additional graphical elements or other visual content, is created with basic levels of understanding of the final visual composition but is not informed by that final composition. Additionally, the content may be shown or re-shown within a previously unknown visual composition.

Currently, content broadcasts are delivered in a single visual composition or alternate compositions are individually created, then made available to end-viewers. Such individual visual compositions are typically not created live.

An aim of good visual composition is the display of visual elements at times and in positions where they do not visually detract from each other - that is, harmonious presentation. Different visual compositions may ideally require the content to be shown at different positions or at different times, if displayed at all.

All of these visual composition techniques and styles are integrated together in the content broadcast and do not take into account differences in composition preference between alternate content producers, end viewers or devices specific display characteristics.

Embodiments of the present invention seek to provide a method of flexibly modifying video content in a manner which avoids occlusion of important visual elements by other visual elements.

The examples described herein are not limited to examples which solve problems mentioned in this background section.

### SUMMARY

Various aspects and features of the invention are as set out in the accompanying independent and dependent claims.

According to an aspect of the present invention, there is provided a computer implemented video image processing method, comprising:
receiving a sequence of video images of a scene;
receiving one or more supplementary media items;
identifying objects of interest within the received video images;
selecting a spatial portion of each received video image to generate a reframed image, the reframing being carried out in dependence on a size and/or position for the received supplementary media items, and a size and/or position of at least one of the identified objects of interest, the spatial portion for each video image being selected to include one or more of the identified objects of interest in that video image; and
rendering a display image, the display image including the reframed image and the supplementary media items.

In this way, the images in the video sequence are each reframed in a manner which preserves visibility of the objects of interest in the scene, as captured in the received video images, while permitting display of the supplementary media items. Embodiments of the invention are able to support a personalised broadcast experience, by allowing users to select visual elements for display along with video content, with the video content being adapted to satisfy viewing contrast (such as supplementary media items to be displayed, aspect ratios and the like), while preserving objects of interest in the visible parts of the display area. Supplementary media items may include information graphics, images or text such as subtitles and other text relating to the scene.

The method may comprise determining which of the identified objects of interest are to be included in the reframed image in dependence on a priority of each of the identified objects. That is, certain of the objects of interest may be more important for the viewer to see than others of the objects of interest. By prioritising objects it is possible to ensure that if some objects of interest are to be lost from view (due for example to constraints in how far out the rendered image may be zoomed), the lost objects are those which are of the lowest importance.

The priority for each object of interest may for example be determined in dependence on a size and/or shape and/or colour of the object. These metrics may be indicative of a nature of the object - such as (in the context of a sports game) a ball, a player (and based on colour, which team the player belongs to), a goal or a corner flag. The priority may also be determined in dependence on a position and/or speed and/or a direction of movement of the object. For example, fast moving objects such as a ball or players rapidly repositioning may be prioritised above relatively stationary players, or static elements such as a corner flag or goalposts. The priority may also be determined in dependence on a proximity of the object to one or more of the other objects. For example, players determined to be proximate a ball in a game of football or rugby are generally prioritised above players relatively distant to the ball.

Selecting the portions of the received video images may be carried out to avoid one or more of the identified objects of interest being obscured by one or more of the supplementary media items. For example, the supplementary media items may include game scores, or team, player or game information, and the present technique may seek to ensure that (high priority) objects of interests in the scene are not occluded by those supplementary media items when displayed.

The selecting of the spatial portion is carried out over successive video images in the sequence. This may be achieved by zooming in, zooming out or panning with respect to the received video images.

The acquired video images are preferably overscan images generated with a field of view greater than a field of view of the display image. The overscan images may be generated at a resolution which is greater than a display resolution at which a display device on which the video sequence is to be displayed is capable of providing. For example, the acquired video images may be captured at 8K resolution, while the display image is rendered at 4K resolution or less (this being a typical maximum resolution of a high definition television set or monitor).

The display image may be rendered at a first device, and at least the step of identifying objects of interest may be carried out at a device separate from the first device. The first device in this case is the client device, which may be a television, set top box, tablet, laptop or desktop computer, or portable electronic device such as a smartphone.

The method may comprise receiving, at the first device or an intermediate device (for example a cloud-based server) separate from the first device, one or more graphic triggers associated with the supplementary media items, object positional metadata indicative of a position of the identified objects of interest, and the sequence of video images. The graphic triggers may indicate a display time and/or a position and/or size for one or more of the supplementary media items.

The method may comprise selecting one or more additional media items for display along with the reframed sequence of video images, the reframing being carried out in dependence on a size and/or position for the selected additional media items. The additional media items may be selected at the client device, based on their own preferences.

According to another aspect of the present invention, there is provided a video image processing system, comprising:
a receiver, configured to receive a sequence of video images of a scene, and one or more supplementary media items;
an object tracker, configured to identify objects of interest within the received video images;
a reframer, configured to select a spatial portion of each received video image to generate a reframed image, the reframing being carried out in dependence on a size and/or position for the received supplementary media items, and a size and/or position of at least one of the identified objects of interest, the spatial portion for each video image being selected to include one or more of the identified objects of interest in that video image; and
a renderer, configured render a display image, the display image including the reframed image and the supplementary media items.

The renderer and the reframer may be provided at a first device and the object tracker may be provided at a second device separate from the first device.

Alternatively, the renderer may be provided at a first device, the reframer provided at a second device separate from the first device, and the object tracker provided at a third device separate from the first device and the second device.

In some implementations, the receiver is provided at a visual tracking component which also includes the object tracker, the reframer is provided at either a client device which also includes the renderer, or a cloud-based service which provides the reframed video stream to the client.

According to another aspect of the present invention, there is provided a computer program which when executed by a computer causes the computer to carry out a method according to the above.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of an image processing system for implementing the present technique;
FIG. 2 is a schematic flow diagram of the overall method of reframing a video sequence according to the present technique;
FIG. 3 is a first schematic view of an overscan image and display image;
FIG. 4 is a second schematic view of an overscan image and display image;
FIG. 5 is a third schematic view of an overscan image and display image;
FIG. 6 is a fourth schematic view of an overscan image and display image; and
FIG. 7 is a fifth schematic view of an overscan image and display image;

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

The present technique provides a system enabling the dynamic reframing of video. The reframing process can take place at a client device (such as a television, set top box, computer, tablet or smartphone) by delivering the full overscan stream or remotely by delivering a subset view to the client. Dynamic reframing enables the display of multiple visual elements, without obstructing areas of significant visual interest.

Considering one existing system, US2021218929 primarily deals with cropping frames of a video, targeting a specific sub-crop size relevant to a target device. Regions of interest are identified as are temporal camera paths and then decisions are made to crop the image to include as many regions of interest as possible within the limits of the crop. However, this is only targeted at producing a sub-crop of original video frames, not allowing an 'over-scanned' image to be presented to the viewing device thereby moving the regions of interest to another part of the device field of view.

Considering another existing system in EP3073741 a method for integrating and dynamically modifying a graphic creation to be used in real time in broadcasting workflows is disclosed. This method is primarily concerned with the live creation of broadcast graphics including data sources and filling in graphics templates. The data and graphics are merged into a composite video/graphics scene. This document does not include any reference to suitability of the graphics elements composited and displayed against the need for correct visual representation of important visual elements contained within the original video.

Considering yet another existing system in US10992902, an aspect ratio conversion method using machine learning is described which uses a process to understand key elements within the video for the purposes of reframing to change aspect ratio. Features which must be included in the reframed shot are automatically extracted, utilising speaking as an important indicator for how to frame the video. However, this does not reference the inclusion of independent graphic elements, or the use of purposeful over framing the original capture at a higher resolution to provide flexibility in the dynamic reframing of live broadcast content.

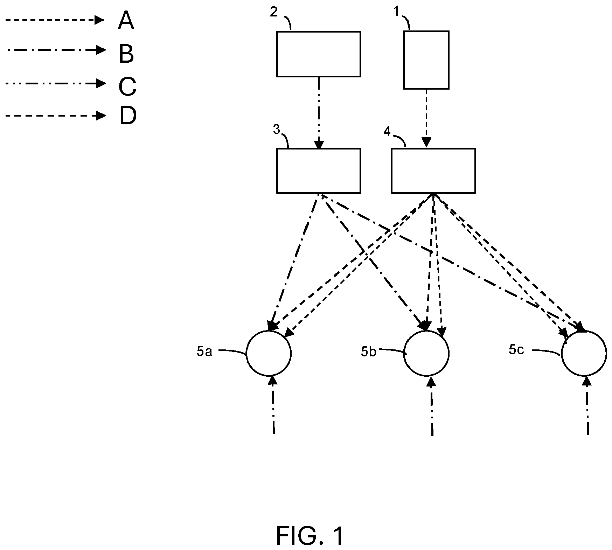

Referring to Figure 1, this shows an image capture and processing system including an overscan video stream source 1, captured for example by a video camera at a sports venue. The video camera captures video images (a video sequence) of a scene. The video camera may have a fixed field of view with respect to the scene, or may be moved and/or zoomed by an operator to track the action within the scene. Figure 1 also shows a network enabled production tool 2 that generates graphic trigger events, either automatically or in response to operator control. The graphic trigger events indicate media items for display along with the video content, for example scores, statistics or other information graphics. The graphic trigger events may for example comprise a media identifier (identifying a media item), a start time and duration (or end time) for display of the media item (relative to the timing of the video content), and a display position (and optionally size). Graphic trigger events are intended to control when and how the media items are to be displayed at a client device, at a time of rendering and display of the corresponding video convent of the video stream source 1 (after processing). Figure 1 also shows a controller component 3 which receives director initiated graphic events trigger events from the production tool 2 and forwards these to client devices 5a, 5b, 5c.

A visual tracking system and video distribution component 4 is also provided, that receives the overscan video stream source 1 and outputs in real-time, the processed video stream and positional, priority and timings data for the significant objects of interest. The visual tracking and distribution component 4 analyses the input (8K) video sequence and determines the location of significant visual elements (objects of interest) within the intended client field of view. Visual object tracking systems are well known in the art. Further, the objects may be tracked in a non-visual manner, such as using locating devices (tags) worn by individuals in the scene (for example relying on smart watches and fitness trackers with a GPS capability or similar). In any case, these elements, once tracked, would be defined prior to a broadcast and include prioritisation metrics per element. For example, significant elements for a football game would include the ball, players, playing area, goal areas, and referee. Different priorities may be associated with different types of element, such objects being identified for example based on size, shape and colour. The prioritisation metrics for each object may be adjusted throughout the broadcast, and may vary for example as a function of movement speed and direction of the object, and proximity to other of the elements/objects. For example, within a football match the player closest to the ball would have a priority increase whilst a player not involved in the current run of play and far from the ball would have a decreased priority. The visual tracking system outputs metadata that describes the location of the elements, frame-by-frame, to be consumed by the client. In regards to a football broadcast, the metadata includes, but is not limited to, positional and timing data for players, ball, pitch and pitch line markings. The overall priority for each tracked object may be function of (for example a weighted combination of) the type, velocity and proximity to other objects, as indicated above.

A visual tracking system as described above allows for identification and frame-by-frame tracking of selected objects of interest. Those objects are considered to be the primary visual elements that any reframing system should continue to show within a client visual presentation.

In Figure 1, the signal flows are indicated with codes arrows. The code for each arrows is indicated by A, B, C and D within Figure 1. Arrows A indicate an overscan video stream source, arrows B indicate director initiated graphic triggers, arrows C indicate user initiated trigger events, and arrows D indicate object positional (and priority) metadata.

The client devices 5a, 5b, 5c receive the overscan video stream source, object metadata (indicating objects of interest within the scene, preferably a priority score for these objects, along with a position and size of the objects), director initiated graphic trigger events, and user initiated graphic trigger events. The client devices 5a, 5b, 5c determine a subset of the overscan video stream source to display by inspecting the object positional, priority and timing data on a frame-by-frame basis.

When a client device 5a, 5b, 5c receives a user or director graphic trigger event, it uses the graphic metadata to determine if the graphic will obscure objects of interest. The decision to reframe/pan/zoom the overscan video is made by the client at graphic display time and monitored for the lifetime of the graphic.

It will be understood that additional visual elements (additional to the video sequence) can be triggered either by the broadcast director (using the graphic trigger events) or the user themselves (via a user interface to the client device 5a, 5b, 5c, for example). In either case, the image for display is adapted to preserve the view of the priority objects of interest, while permitting the selected visual elements to be displayed.

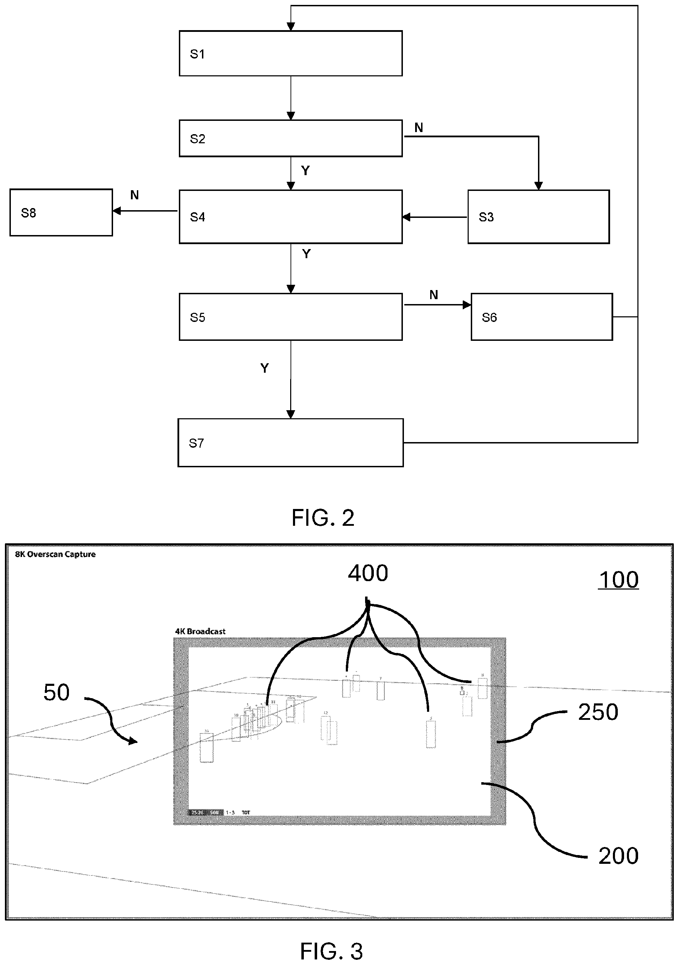

Figures 3 to 7 show various representations of a scene 50, which is captured at an overscan (8K) resolution with a first (wide) field of view 100. In each of Figures 3 to 8, a narrower (4K) display resolution is shown, which includes a selected portion (image region) 200. Objects of interest 400 are shown to be provided within the selected portion 200 in each case.

In Figure 3, a safe zone 250 around the periphery of a main display area 200 is provided. Preferably, objects of interest are not displayed (in the final output video sequence) within the safe zone 250, particularly not if they have a high priority. As shown in Figure 3, objects 400 are identified by the module 400, in this case represented by rectangles.

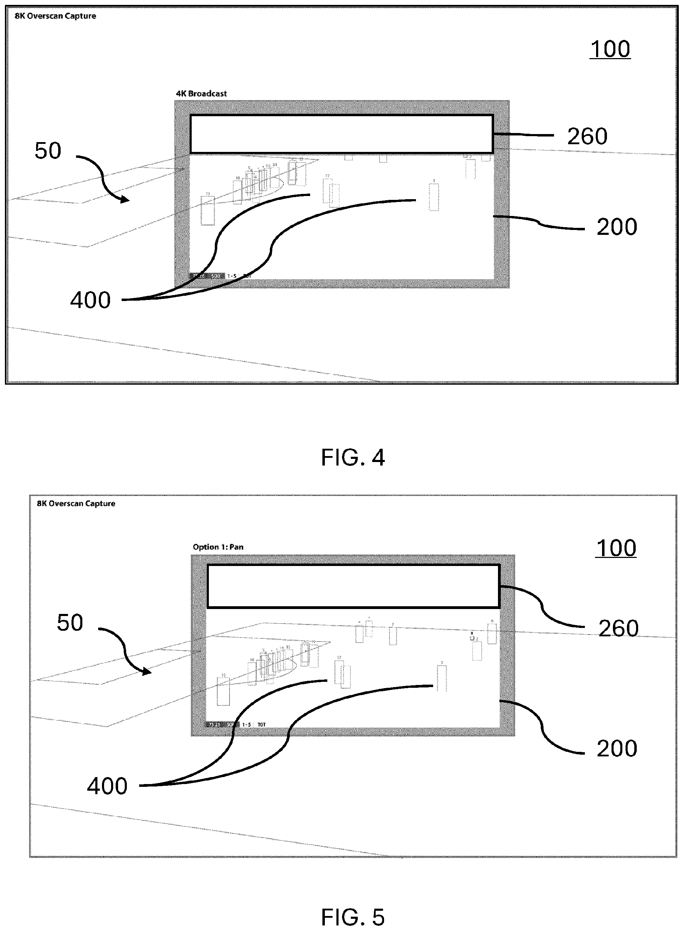

In Figure 4, an additional area is required for the display of an additional media item 260, selected either at the broadcast side (for example by a content director) or at the client device. The additional area is at a top portion of a display area for presentation to a viewer. As a result of the positioning and size of this media item 260, the proposed new visual content placement obscures some of the objects of interest 400, in the upper region of the initial display area. To account for this, if additional visual elements are called upon to be displayed, the system will reframe the original visual element to allow the selected objects of interest 400 as well as the additional visual elements 260 without either obscuring the other. This reframing result, defining the display area 200, is shown in figure 5. In particular, in Figure 5 the area for display has been panned upwardly (compared with Figure 4) such that the unobscured display area includes all of the priority objects of interest.

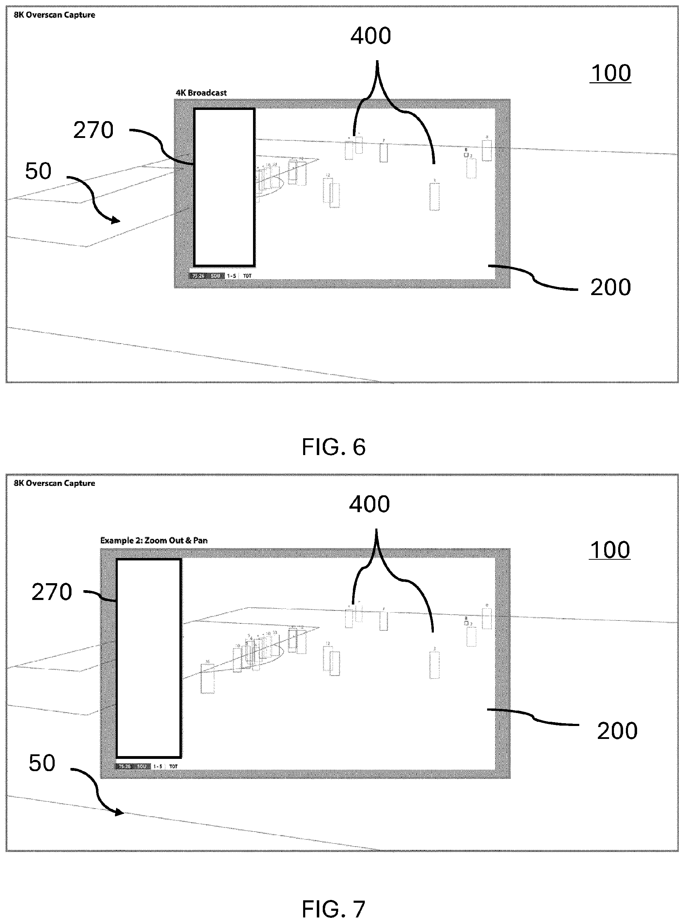

Similarly, in Figure 6 an additional area is required for the display of an additional media item 270. The additional area in this case is at a left hand side of a display area for presentation to a viewer. As a result of the positioning and size of this media item 270, the proposed new visual content placement obscures some of the objects of interest 400. To account for this, if additional visual elements are called upon to be displayed, the system will reframe the original visual element to allow the selected objects of interest 400 as well as the additional visual elements 270 without either obscuring the other. This reframing result, defining the display area 200, is shown in figure 7. In particular, in Figure 7 the area for display 200 has been zoomed out and panned (to the left, compared with Figure 6) such that the unobscured display area includes all of the priority objects of interest.

If an original video source element is intended to show objects of interest, with those same objects and additional minimal graphic overlays, the actual framing of the source element should be captured, (for example 8K resolution camera capture retaining desired 4K client visual presentation). This overscan framing 100, recorded at a higher resolution, entirely encompasses the intended client field of view 200. The additional visual elements are HTML components that are rendered directly by the client.

A client-side reframing method allows user-initiated graphics that are related to the broadcast such as subtitles, team information, player statistics, voting, replays, additional camera feeds, accessibility signers, to be processed and dynamically reframed locally by the client. The user graphics would be executed in real-time for immediate display, once the system has reframed, to allow for the display of the requested visual elements.

It should be noted that if the broadcast stream is displayed behind the directors live view, the initiation of visual elements will be synchronised by the client relative to the directors' original timeline.

With reference to Figure 2, the process used by the client to decide if the view needs to be reframed/panned/zoomed is as described. This dynamic framing is described with reference to a live sports broadcast that is being delivered to the client devices 5a, 5b, 5c. The process of Figure 2 is executed continuously as updates to the object positional data (and/or priority) are received. Throughout the live sports presentation, either the production team (via the production tool 2) or viewer (via the client device 5a, 5b, 5c) can trigger the appearance of visual elements in addition to the broadcast video stream. When a graphic is triggered by the director, comprehensive information, including positional coordinates, size, timing, initiation, termination, and duration data is provided to the controller component and forwarded to the client devices.

First, at a step S1, the client device receives the overscan clean video stream and associated objects of interest metadata from the visual tracking component 4. At a step S2, it is determined whether the priority objects of interest are contained within the current subset view (display area 200). This may for example include comparing a priority for each object with a priority threshold. Objects satisfying (having a priority equal to or greater than) the priority threshold will result in reframing, whereas objects having a priority lower than this will not, although they may incidentally be included in the display area anyway. If one or more priority objects of interest are not contained within the current subset view, then at a step S3 the subset view is reframed (by panning or zooming for example) to contain the priority objects of interest. In this way, it is possible to ensure that the viewable subset video 200 contains the highest priority objects of interest. It will be appreciated that this reframing takes into account both a current position and (current perceived) dimensions (size and/or shape) of each object to be included in the display area 200.

Then, at a step S4, it is determined whether there is a graphic trigger event timestamp that matches the video playback timestamp. If not, then there is no change (step S8). If there is a video playback timestamp which matches a graphic trigger event timestamp, then at a step S5 it is determined if the resulting graphic will obscure objects of interest in the video stream. If not, then at a step S6 the graphic is overlaid, and the process returns to the step S1, so that the process continues on a frame-by-frame basis. If at the step S6 it is determined that the resulting graphic will obscure objects of interest in the video stream, then at a step S7 the subset view is reframed (pan or zoom), before the process returns to the step S1, for the graphic to be overlaid, and subsequently for the process to continue to the next frame in the video sequence. It will be appreciated that this reframing takes into account both a current position and (current perceived) dimensions (size and/or shape) of each tracked object to be included, as well as the display location and dimensions of the media item (graphic) to be included in the display area 200.

While the above method and apparatus references client-side reframing and controlled presentation of graphics, it will be understood that in an alternative implementation only the rendering of the final image on a display need be carried out by the client device. In this case, a cloud service could be used to compose and composite a presentation using the reframing capabilities described above, with the cloud service providing the reframed video sequence to the client device for display.

A key goal in the production of a live broadcast sports programme is to combine video of the event with overlayed information graphics, a way that presents all elements clearly and information graphics do not obscure key actors or actions within the video. In the above, a system is described that tracks specific objects of interest within a video frame, and then dynamically reframes the video to accommodate the positioning of information graphics, ensuring both key elements within the video and graphics are presented in a layout with minimal overlay.

To enable the dynamic re-framing of the video and positioning of graphics, the preferred presentation of graphic elements (media items) is known in advance, including their size, scale, and screen position. The preferred presentation may be informed by the content producer, the viewer, or the display device to bias the dynamic re-framing based on prioritising visual content, production guidelines, end-viewer wishes, accessibility requirements, and device-specific limitations or advantages. The constraints to the re-framing process may be considered reframing constraints.

An advantage such a system may provide is creating an improved visual composition that enables visual changes to be made dynamically and simultaneously, matching the needs of content producers, individual content viewers and content display devices.

The present technique may be applied to live content, where content captured, augmented with object tracking and priority metadata, and media items and corresponding trigger metadata is provided to a user substantially in real time.

In some cases, there may be some interaction between priority of the objects, and compromises required in the reframing. For example, a maximum zoom out (widest permissible field of view for display) may vary as a function of priority. So, for example if priority is bounded from 1 to 10, objects having a priority or 5 or less may be ignored (not included in the display field of view), those of 6 to 8 might permit zooming to a first zoom level (field of view), whereas those of 9 or 10 might permit an even wider angle view, to permit two relatively distant (from each other, within the scene) objects to be simultaneously in view. The assumption may be that typically, higher priority objects are likely to be closer to one another, but the system may be configured to cope with allowing that widest zoom-out level when this is not the case. This would only be desirable when the very highest priorities are involved and could be downplayed when lower priority objects are chosen to be in or out of frame.

In some cases, a panning rate/zooming rate may be constrained to take place over a number of frames (rather than instantly) if the prioritisation changes rapidly, or the location of objects changes rapidly, potentially with the result that some higher priority objects may move out of view temporarily while the panning/zooming completes. In particular, the re-framing system may be configured to have a set minimum number of frames over which to make any visual re-framing. This would fit in with the typical 'look' of a vision-mixed broadcast and avoid 'crash zooms' that would happen over, say, less than 12 to 25 frames (somewhere close to ½ a second within a 25 or 50 fps broadcast system). Any requirement to change the framing may be constrained to happen after any previous re-framing operation had completed, (and maybe with another 12 to 25 frame delay to avoid a feeling of dizziness when watching.

## Claims

1. A computer implemented video image processing method, comprising:
receiving a sequence of video images of a scene;
receiving one or more supplementary media items;
identifying objects of interest within the received video images;
selecting a spatial portion of each received video image to generate a reframed image, the reframing being carried out in dependence on a size and/or position for the received supplementary media items, and a size and/or position of at least one of the identified objects of interest, the spatial portion for each video image being selected to include one or more of the identified objects of interest in that video image; and
rendering a display image, the display image including the reframed image and the supplementary media items.

2. The method of claim 1, comprising determining which of the identified objects of interest are to be included in the reframed image in dependence on a priority of each of the identified objects.

3. The method of claim 2, wherein the priority for each object of interest is determined in dependence on one or more of a size and/or shape and/or colour of the object, a position and/or speed and/or a direction of movement of the object, and a proximity of the object to one or more of the other objects.

4. The method of any preceding claim, wherein selecting the portions of the received video images is carried out to avoid one or more of the identified objects of interest being obscured by one or more of the supplementary media items.

5. The method of any preceding claim, wherein the selecting of the spatial portion is carried out over successive video images in the sequence by zooming in, zooming out or panning with respect to the received video images.

6. The method of any preceding claim, wherein the acquired video images are overscan images generated with a field of view greater than a field of view of the display image.

7. The method according to claim 6, wherein the acquired video images are captured at 8K resolution, and the display image is rendered at 4K resolution or less.

8. The method according to any preceding claim, wherein the display image is rendered at a first device, and wherein at least the step of identifying objects of interest is carried out at a device separate from the first device.

9. The method according to any preceding claim, comprising receiving, at the first device or an intermediate device separate from the first device, one or more graphic triggers associated with the supplementary media items, object positional metadata indicative of a position of the identified objects of interest, and the sequence of video images.

10. The method according to claim 9, wherein the graphic triggers indicate a display time and/or a position and/or size for one or more of the supplementary media items.

11. The method according to any preceding claim, comprising selecting one or more additional media items for display along with the reframed sequence of video images, the reframing being carried out in dependence on a size and/or position for the selected additional media items.

12. A video image processing system, comprising:
a receiver, configured to receive a sequence of video images of a scene, and one or more supplementary media items;
an object tracker, configured to identify objects of interest within the received video images;
a reframer, configured to select a spatial portion of each received video image to generate a reframed image, the reframing being carried out in dependence on a size and/or position for the received supplementary media items, and a size and/or position of at least one of the identified objects of interest, the spatial portion for each video image being selected to include one or more of the identified objects of interest in that video image; and
a renderer, configured render a display image, the display image including the reframed image and the supplementary media items.

13. The system according to claim 12, wherein the renderer and the reframer are provided at a first device and the object tracker is provided at a second device separate from the first device.

14. The system according to claim 12, wherein the renderer is provided at a first device, the reframe is provided at a second device separate from the first device, and the object tracker is provided at a third device separate from the first device and the second device.

15. A computer program which when executed by a computer causes the computer to carry out a method according to any one of claims 1 to 10.
